# FASCICULE DE BREVET EUROPEEN

(11) **EP 3 610 185 B1**
(45) Date de publication et mention de la délivrance du brevet: **17.02.2021**
(21) Numéro de dépôt: 18716291.2
(22) Date de dépôt: 11.04.2018
(51) Int. Cl.: F16L 11/08, F16L 33/01

(54) **PROCÉDÉ DE FIXATION D'UN ÉLÉMENT D'ANCRAGE SUR UN ÉLÉMENT D'ARMURE D'UNE CONDUITE FLEXIBLE, CONDUITE ET MÉTHODE DE MONTAGE ASSOCIÉES**
VERFAHREN ZUM BEFESTIGEN EINES VERANKERUNGSELEMENTS AN EINEM ELEMENT DER PANZERUNG EINES FLEXIBLEN ROHRS, ZUGEHÖRIGES ROHR UND ZUGEHÖRIGES MONTAGEVERFAHREN
METHOD FOR ATTACHING AN ANCHORAGE ELEMENT TO AN ELEMENT OF THE ARMOUR OF A FLEXIBLE PIPE, ASSOCIATED PIPE AND ASSOCIATED FITTING METHOD

(30) Priorité: 12.04.2017 FR 1753199
(43) Date de publication de la demande: 19.02.2020
(73) Titulaire: TECHNIP N-POWER, 92400 Courbevoie (FR)
(72) Inventeur: DEHAIS, Romuald, 76490 Saint-Arnoult (FR)
(74) Mandataire: Lavoix
(86) Numéro de dépôt international: PCT/EP2018/059328
(87) Numéro de publication internationale: WO 2018/189261

(56) Documents cités:
- EP-B1- 1 206 659
- EP-B1- 1 579 141
- WO-A1-99/19655
- WO-A1-2008/037867
- FR-A1- 3 008 161
- FR-A1- 3 016 020

## Description

La présente invention concerne un procédé de fixation d'au moins un élément d'ancrage transverse sur un élément d'armure destiné à être reçu dans un embout d'extrémité d'une conduite flexible. L'invention concerne également une conduite flexible et une méthode de montage d'un embout de cette conduite flexible.

La conduite est en particulier une conduite flexible de type non liée (« unbonded ») destinée au transport d'hydrocarbures à travers une étendue d'eau, tel qu'un océan, une mer, un lac ou une rivière, ou à l'injection d'eau pour la stimulation de puits.

Une telle conduite flexible est par exemple réalisée suivant les documents normatifs API 17J (Spécification for Unbonded Flexible Pipe), API RP 17B (Recommended Practice for Flexible Pipe) et API 16C (Choke and Kill Equipment) établis par l'American Petroleum Institute.

La conduite est généralement formée d'un ensemble de couches concentriques et superposées. Elle est considérée comme « non liée » au sens de la présente invention dès lors qu'au moins une des couches de la conduite est apte à se déplacer longitudinalement par rapport aux couches adjacentes lors d'une flexion de la conduite. En particulier, une conduite non liée est une conduite dépourvue de matériaux liants raccordant des couches formant la conduite.

La conduite est généralement disposée à travers une étendue d'eau, entre un ensemble de fond, destiné à recueillir le fluide exploité dans le fond de l'étendue d'eau et un ensemble de surface flottant destiné à collecter et à distribuer le fluide. L'ensemble de surface peut être une plateforme semi-submersible, un FPSO ou un autre ensemble flottant.

Dans certains cas, pour l'exploitation de fluides en eaux profondes, la conduite flexible présente une longueur supérieure à 800 m. Les extrémités de la conduite présentent des embouts pour le raccordement à l'ensemble de fond et à l'ensemble de surface.

Ces conduites subissent des efforts très élevés en traction axiale, notamment lorsque l'étendue d'eau dans laquelle est disposée la conduite est très profonde. Ces efforts sont repris par une ou plusieurs couches d'armures de traction composées d'éléments d'armure filiformes en acier enroulés à pas long autour des couches internes de la conduite, et dont les extrémités sont fixées dans les embouts d'extrémité.

Dans ce cas, l'embout supérieur reliant la conduite à l'ensemble de surface doit reprendre une tension axiale très importante, qui peut atteindre plusieurs centaines de tonnes.

La tension axiale présente non seulement une valeur moyenne élevée, mais aussi des variations permanentes en fonction des mouvements verticaux de l'ensemble de surface et de la conduite, sous l'effet de l'agitation de l'étendue d'eau provoquée par la houle ou par les vagues.

Les variations de tension axiale peuvent atteindre plusieurs dizaines de tonnes et se répéter continuellement durant la durée de service de la conduite. En 20 ans, la conduite peut être amenée à subir un nombre de cycles en tension important. Par exemple, plus de 20 millions de cycles peuvent se produire.

Il est donc nécessaire d'assurer une fixation particulièrement robuste entre les couches d'armures de traction et le corps de l'embout d'extrémité. Pour cela, il est connu d'introduire les extrémités des éléments d'armure dans un espace de réception défini par l'embout d'extrémité, puis de remplir l'espace de réception avec un matériau comme une résine thermodurcissable, pour emprisonner les extrémités des éléments d'armure.

Pour améliorer la tenue des éléments d'armure, WO 2008/037867 décrit un procédé de soudage d'éléments d'ancrage sur les éléments d'armure, au niveau des extrémités. Les éléments d'ancrage sont des éléments métalliques faisant saillie transversalement sur l'élément d'armure pour l'élargir, ce qui bloque l'élément d'armure en translation et l'empêche de glisser à l'intérieur de l'embout.

Ce procédé peut encore être amélioré. En effet, les éléments d'ancrage sont fixés aux éléments d'armure par soudage longitudinal le long des faces en contact, par exemple par soudage à l'arc électrique. Ce procédé de fixation nécessite l'intervention de personnel qualifié, pour le soudage. De plus, il requiert un temps important, puisqu'au moins un élément d'ancrage doit être fixé sur chaque extrémité de chaque élément d'armure, par deux soudures longitudinales à chaque fois.

Un but de l'invention est d'assurer une fixation robuste des éléments d'armure dans un embout de conduite flexible, de manière simple et très rapide.

A cet effet, l'invention a pour objet un procédé de fixation du type précité, caractérisé en que le procédé comprend les étapes suivantes :
- fourniture d'un dispositif de fixation présentant une cavité recevant un élément d'ancrage ;
- mise en place d'une ouverture de la cavité en regard de l'élément d'armure ;
- fusion d'une extrémité de l'élément d'ancrage en regard de l'élément d'armure et d'une région de l'élément d'armure en regard de l'élément d'ancrage, dans la cavité du dispositif de fixation ;
- forgeage de l'élément d'ancrage transversalement sur l'élément d'armure, par le dispositif de fixation ; et
- formation d'une soudure liant l'élément d'ancrage et l'élément d'armure.

Le procédé selon l'invention peut comprendre l'une ou plusieurs des caractéristiques suivantes, prise(s) isolément ou suivant toute combinaison techniquement possible :
- le procédé comprend une étape de traitement thermique de l'élément d'ancrage et de l'élément d'armure postérieure à l'étape de forgeage, la soudure liant l'élément d'ancrage et l'élément d'armure se formant lors de l'étape de traitement thermique ;
- la soudure présente une étendue transversale inférieure à une largeur de l'élément d'armure ;
- l'étape de fusion comprend la formation d'un arc électrique de fusion entre l'élément d'ancrage et l'élément d'armure ;
- le procédé comprend une étape de diffusion d'un gaz neutre autour d'au moins l'un de l'extrémité de l'élément d'ancrage ou de la région de l'élément d'armure, l'étape de diffusion ayant lieu pendant les étapes de fusion et de forgeage ;
- l'étape de fusion comprend la formation d'un arc d'amorçage préalable à la formation de l'arc électrique de fusion, l'arc d'amorçage présentant une intensité inférieure à une intensité de l'arc électrique de fusion ;
- une bague réfractaire est positionnée autour de l'extrémité de l'élément d'ancrage en regard de l'élément d'armure au cours de l'étape de mise en place ;
- un ratio entre une longueur de l'élément d'ancrage, mesurée selon une direction transverse à l'élément d'armure, et une largeur de l'élément d'ancrage, mesurée selon une direction parallèle à l'élément d'armure, est supérieur à 2, avantageusement supérieur à 4 ;
- la longueur de l'élément d'ancrage est supérieure à une épaisseur de l'élément d'armure, mesurée selon la même direction que la longueur de l'élément d'ancrage, avantageusement deux fois supérieure à l'épaisseur de l'élément d'armure ;
- l'élément d'ancrage est sensiblement cylindrique et présente un axe sensiblement perpendiculaire à un axe local de l'élément d'armure ;
- le procédé comprend une succession de fixations d'éléments d'ancrage transverses, chaque fixation comprenant les étapes de fourniture, de mise en place, de fusion et de forgeage, une durée séparant chaque fixation étant inférieure ou égale à 1 minute, avantageusement inférieure à 30 secondes ;
- les éléments d'ancrage sont fixés séparés les uns des autres d'une distance le long de l'élément d'armure comprise entre 2 cm et 20 cm, préférentiellement entre 2 cm et 10 cm et avantageusement entre 2 cm et 5 cm ; et
- l'élément d'ancrage est fait à base d'un acier présentant une résistance mécanique en traction supérieure ou égale à 400 MPa.

L'invention a également pour objet une méthode de montage d'un embout d'extrémité de conduite flexible comprenant les étapes suivantes :
- fourniture d'une conduite flexible comprenant :
   - au moins une gaine tubulaire délimitant un passage de circulation ; et
   - au moins une couche d'armures de traction disposée extérieurement par rapport à la gaine tubulaire, la couche d'armures comprenant une pluralité d'éléments d'armure filiformes ;
- dégagement d'un tronçon d'extrémité de chaque élément d'armure ;
- mise en place d'une voûte d'extrémité à une extrémité de la conduite ;
- fixation d'au moins un élément d'ancrage sur chaque élément d'armure par un procédé selon l'invention ;
- mise en place et fixation d'un capot sur la voûte d'extrémité, formant un espace de réception des tronçons d'extrémité des éléments d'amure ;
- introduction d'un matériau de remplissage dans l'espace, noyant les éléments d'ancrage ; et
- solidification du matériau de remplissage autour des tronçons d'extrémité et des éléments d'ancrage.
L'invention a en outre pour objet une conduite flexible comprenant :
- au moins une gaine tubulaire délimitant un passage de circulation ;
- au moins une couche d'armures de traction disposée extérieurement par rapport à la gaine tubulaire, la couche d'armures comprenant une pluralité d'éléments d'armure filiformes ; et
- au moins un embout d'extrémité situé à une extrémité de la conduite,
l'embout comportant une voûte d'extrémité et un capot, définissant entre eux un espace de réception des tronçons d'extrémité des éléments d'armure, l'espace étant rempli d'un matériau de remplissage,
caractérisée en ce que chaque tronçon d'extrémité présente au moins un élément d'ancrage faisant saillie de façon transverse, l'élément d'ancrage étant noyé dans le matériau de remplissage, l'élément d'ancrage ayant été fixé au tronçon d'extrémité par un procédé selon l'invention.

L'invention sera mieux comprise à la lecture de la description qui va suivre, donnée uniquement à titre d'exemple, et faite en se référant aux dessins annexés, sur lesquels :
- la figure 1 est une vue en perspective partiellement écorchée d'un tronçon d'une conduite flexible ;
- la figure 2 est une vue schématique en coupe suivant un plan axial médian d'un embout de la conduite flexible de la figure 1 ;
- la figure 3 est une vue en perspective de l'extrémité d'un élément d'armure inséré dans l'embout de la figure 2 ;
- la figure 4 est une photographie en coupe illustrant une soudure formée entre un élément d'ancrage et un élément d'armure par le procédé selon l'invention ; et
- les figures 5, 6 et 7 sont des vues en coupe de côté des étapes du procédé de fixation d'un élément d'ancrage sur l'extrémité d'un élément d'armure, tel que visible sur la figure 3.

Dans tout ce qui suit, les termes « extérieur » et « intérieur » s'entendent généralement de manière radiale par rapport à un axe A-A' de la conduite, le terme « extérieur » s'entendant comme relativement plus éloigné radialement de l'axe A-A' et le terme « intérieur » s'étendant comme relativement plus proche radialement de l'axe A-A' de la conduite.

Les termes « avant » et « arrière » s'entendent de manière axiale par rapport à un axe A-A' de la conduite, le terme « avant » s'entendant comme relativement plus éloigné du milieu de la conduite et plus proche d'une de ses extrémités, le terme « arrière » s'entendant comme relativement plus proche du milieu de la conduite et plus éloigné d'une de ses extrémités. Le milieu de la conduite est le point de la conduite situé à égale distance des deux extrémités de cette dernière.

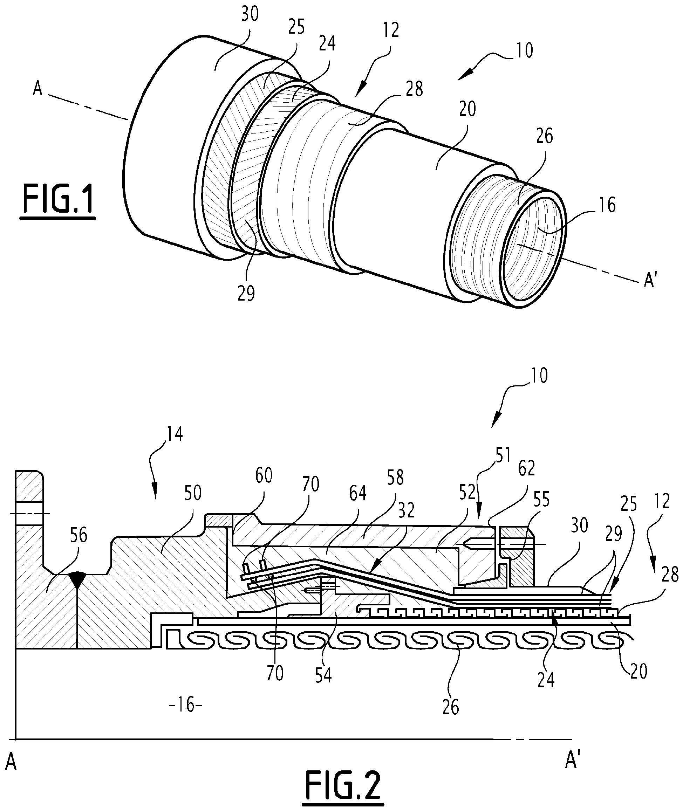

Une première conduite flexible 10 selon l'invention est illustrée partiellement par la figure 1.

La conduite flexible 10 comporte un tronçon central 12 illustré en partie sur la figure 1. Elle comporte, à chacune des extrémités axiales du tronçon central 12, un embout d'extrémité 14 réalisé par une méthode selon l'invention, partiellement représenté sur la figure 2.

En référence à la figure 1, la conduite 10 délimite un passage central 16 de circulation d'un fluide, avantageusement d'un fluide pétrolier. Le passage central 16 s'étend suivant un axe A-A', entre l'extrémité amont et l'extrémité aval de la conduite 10. Il débouche à travers les embouts 14.

La conduite flexible 10 est destinée à être disposée à travers une étendue d'eau (non représentée) dans une installation d'exploitation de fluide, notamment d'hydrocarbures.

L'étendue d'eau est par exemple, une mer, un lac ou un océan. La profondeur de l'étendue d'eau au droit de l'installation d'exploitation de fluide est par exemple comprise entre 500 m et 3000 m.

L'installation d'exploitation de fluide comporte un ensemble de surface notamment flottant et un ensemble de fond (non représentés) qui sont généralement raccordés entre eux par la conduite flexible 10.

La conduite flexible 10 est de préférence une conduite « non liée » (désignée par le terme anglais « unbonded »).

Au moins deux couches adjacentes de la conduite flexible 10 sont libres de se déplacer longitudinalement l'une par rapport à l'autre lors d'une flexion de la conduite. Avantageusement, toutes les couches de la conduite flexible sont libres de se déplacer l'une par rapport à l'autre. Une telle conduite est par exemple décrite dans les documents normatifs publiés par l'American Petroleum Institute (API), API 17J « Spécification for Unbonded Flexible Pipe » (4ème édition, Mai 2014), API RP17B « Recommended Practice for Unbonded Flexible Pipe» (5ème édition, Mai 2014) et API 16C « Choke and Kill Equipment » (2ème édition, Mars 2015).

Comme illustré par la figure 1, la conduite 10 délimite une pluralité de couches concentriques autour de l'axe A-A', qui s'étendent continûment le long du tronçon central 12 jusqu'aux embouts 14 situés aux extrémités de la conduite.

Selon l'invention, la conduite 10 comporte au moins une première gaine tubulaire 20 à base de matériau polymère constituant avantageusement une gaine de pression.

La conduite 10 comporte en outre au moins une couche d'armures de traction 24, 25 disposée extérieurement par rapport à la première gaine 20.

Avantageusement, et selon l'utilisation souhaitée, la conduite 10 comporte en outre une carcasse interne 26 disposée à l'intérieur de la gaine de pression 20, une voûte de pression 28 intercalée entre la gaine de pression 20 et la ou les couches d'armures de traction 24, 25 et une gaine externe 30, destinée à la protection de la conduite 10.

De manière connue, la gaine de pression 20 est destinée à confiner de manière étanche le fluide transporté dans le passage 16. Elle est formée en matériau polymère, par exemple à base d'une polyoléfine tel que du polyéthylène ou du polypropylène, à base d'un polyamide tel que du PA11 ou du PA12, ou à base d'un polymère fluoré tel que du polyfluorure de vinylidène (PVDF) ou du perfluoro alkoxy (PFA).

L'épaisseur de la gaine de pression 20 est par exemple comprise entre 5 mm et 20 mm.

La carcasse 26, lorsqu'elle est présente, est formée par exemple d'un feuillard métallique profilé, enroulé en spirale. Les spires du feuillard sont avantageusement agrafées les unes aux autres, ce qui permet de reprendre les efforts radiaux d'écrasement.

Dans cet exemple, la carcasse 26 est disposée à l'intérieur de la gaine de pression 20. La conduite est alors désignée par le terme anglais « rough bore » en raison de la géométrie de la carcasse 26

En variante (non représentée), la conduite flexible 10 est dépourvue de carcasse interne 26, elle est alors désignée par le terme anglais « smooth bore ».

L'enroulement hélicoïdal du feuillard métallique profilé formant la carcasse 26 est à pas court, c'est-à-dire qu'il présente un angle d'hélice de valeur absolue proche de 90°, typiquement compris entre 75° et 90°.

Dans cet exemple, la voûte de pression 28 est destinée à reprendre les efforts liés à la pression régnant à l'intérieur de la gaine de pression 20. Elle est par exemple formée d'un fil profilé métallique entouré en hélice autour de la gaine 20. Le fil profilé présente généralement une géométrie complexe, notamment en forme de Z, comme dans l'exemple représenté sur la figure 2, ou bien en forme de T, de U, de K, de X ou de I.

La voûte de pression 28 est enroulée en hélice à pas court autour de la gaine de pression 20, c'est-à-dire avec un angle d'hélice de valeur absolue proche de 90°, typiquement compris entre 75° et 90°.

La conduite flexible 10 selon l'invention comprend au moins une couche d'armures 24, 25 formée d'un enroulement hélicoïdal d'au moins un élément d'armure 29 allongé.

Typiquement, la conduite flexible comprend au moins deux couches d'armures mais elle peut comprendre plus de deux couches d'armures, par exemple quatre couches d'armures.

Dans l'exemple représenté sur la figure 1, la conduite flexible 10 comporte une pluralité de couches d'armures 24, 25, notamment une couche d'armures intérieure 24, appliquée sur la voûte de pression 28 et une couche d'armures extérieure 25 autour de laquelle est disposée la gaine extérieure 30.

Chaque couche d'armures 24, 25 comporte des éléments d'armure 29 longitudinaux enroulés en hélice à pas long autour de l'axe A-A' de la conduite.

Par « enroulé à pas long », on entend que la valeur absolue de l'angle d'hélice est inférieure à 60°, et est typiquement comprise entre 25° et 55°.

Les éléments d'armure 29 d'une première couche 24 sont enroulés généralement suivant un angle opposé par rapport aux éléments d'armure 29 d'une deuxième couche 25. Ainsi, si l'angle d'enroulement des éléments d'armure 29 de la première couche 24 est égal à + α, α étant compris entre 25° et 55°, l'angle d'enroulement des éléments d'armure 29 de la deuxième couche d'armure 25 disposée au contact de la première couche d'armures 24 est par exemple égal à - α°.

Les éléments d'armure 29 sont par exemple formés par des fils métalliques, notamment des fils en acier, ou par des rubans en matériau composite, par exemple des rubans renforcés de fibres de carbone.

Comme on le verra plus bas, en référence à la figure 2, les éléments d'armure 29 présentent chacun un tronçon d'extrémité 32 introduit dans l'embout 14. Le tronçon d'extrémité 32 s'étend jusqu'à une extrémité libre disposée dans l'embout 14. Il présente avantageusement une trajectoire hélicoïdale ou pseudo-hélicoïdale d'axe A-A' dans l'embout 14.

La gaine externe 30 est destinée à empêcher la perméation de fluide depuis l'extérieur de la conduite flexible vers l'intérieur. Elle est avantageusement réalisée en matériau polymère, notamment à base d'une polyoléfine tel que du polyéthylène ou du polypropylène, à base d'un polyamide tel que du PA11 ou du PA12, ou à base d'un polymère fluoré tel que du polyfluorure de vinylidène (PVDF) ou du perfluoro alkoxy (PFA).

L'épaisseur de la gaine externe 30 est par exemple comprise entre 5 mm et 20 mm.

Selon une variante de réalisation de la conduite flexible de la Figure 1, les couches d'armures de traction sont enroulées en hélice autour de son axe longitudinal, en sens opposés, selon un angle précis d'enroulement égal à 55°. La structure de conduite flexible est alors « équilibrée » et est donc peu sujette aux variations de longueur et aux effets de torsion en cas de forte pression interne. Une telle structure ne comprend pas de voûte de pression. Ainsi, la couche d'armures intérieure n'est plus appliquée sur la voûte de pression, mais est directement appliquée au contact de la gaine de pression.

Comme illustré par la figure 2, chaque embout 14 comporte une voûte d'extrémité 50 et un capot extérieur de liaison 51 faisant saillie axialement vers l'arrière à partir de la voûte 50. Le capot 51 délimite, avec la voûte d'extrémité 50, un espace 52 de réception des extrémités libres 32 des éléments d'armure 29.

L'embout 14 comporte en outre un ensemble avant 54 d'étanchéité autour de la gaine de pression 20 et un ensemble arrière 55 d'étanchéité autour de la gaine extérieure 30, représentés schématiquement sur la figure 2.

Dans cet exemple, la voûte d'extrémité 50 est destinée à raccorder la conduite 10 à un autre embout de connexion 14 ou à des équipements terminaux, avantageusement par l'intermédiaire d'une bride d'extrémité 56.

La voûte 50 présente un alésage central destiné à recevoir l'extrémité de la première gaine 20 et à permettre l'écoulement du fluide circulant à travers le passage central 16 vers l'extérieur de la conduite 10.

Le capot 51 comporte une paroi périphérique 58 tubulaire s'étendant autour de l'axe A-A'. La paroi périphérique 58 présente un bord avant 60 fixé sur la voûte d'extrémité 50, à l'écart radialement des couches d'armures 24, 25 et un bord arrière 62 s'étendant axialement vers l'arrière au-delà de la voûte d'extrémité 50, sur lequel est fixé l'ensemble arrière 55.

Le capot 51 délimite l'espace 52 radialement vers l'extérieur. Une face arrière de la voûte d'extrémité 50 délimite axialement l'espace 52 vers l'avant.

Le volume de l'espace 52 varie selon la taille de l'embout. Par exemple, pour une conduite de diamètre interne égal à 6", soit environ 15,2 cm, le volume de l'espace 52 est environ de 30 litres, et pour une conduite de diamètre interne égal à 16", soit environ 40,6 cm, le volume de l'espace 52 est environ de 60 litres.

L'ensemble avant 54 d'étanchéité est avantageusement situé à l'avant de l'embout 14, en contact avec la voûte 50, en étant décalé axialement vers l'avant par rapport à l'ensemble arrière 55 d'étanchéité.

De manière connue, l'ensemble avant 54 comporte une bague avant de sertissage, destinée à venir en prise sur la gaine de pression 20.

Dans l'exemple représenté sur les figures 1 et 2, dans lequel la conduite 10 comporte une voûte de pression 28, l'ensemble avant 54 comporte en outre une bague intermédiaire d'arrêt de la voûte de pression 28.

L'ensemble arrière 55 d'étanchéité est disposé à l'arrière de l'ensemble avant 54. Il comporte au moins une bague arrière de sertissage sertissant la gaine externe 30.

Les ensembles avant 54 et arrière 55 sont fixés avec des moyens de fixation conventionnels, comme des vis, à la voûte 50 et au capot 51 respectivement.

L'embout 14 comporte en outre un matériau 64 de remplissage solide. Le matériau de remplissage 64 comprend par exemple une résine polymérique thermodurcissable de type epoxy, polyimide (PI), polysulfone (PS), polyetheretherketone (PEEK), ou poly(sulfure de phénylène) (PPS).

Le matériau de remplissage 64 est disposé dans l'espace 52 autour de la voûte 50 et noie les tronçons d'extrémité 32 des éléments d'armure 29. Avantageusement, le matériau de remplissage 64 remplit totalement l'espace 52.

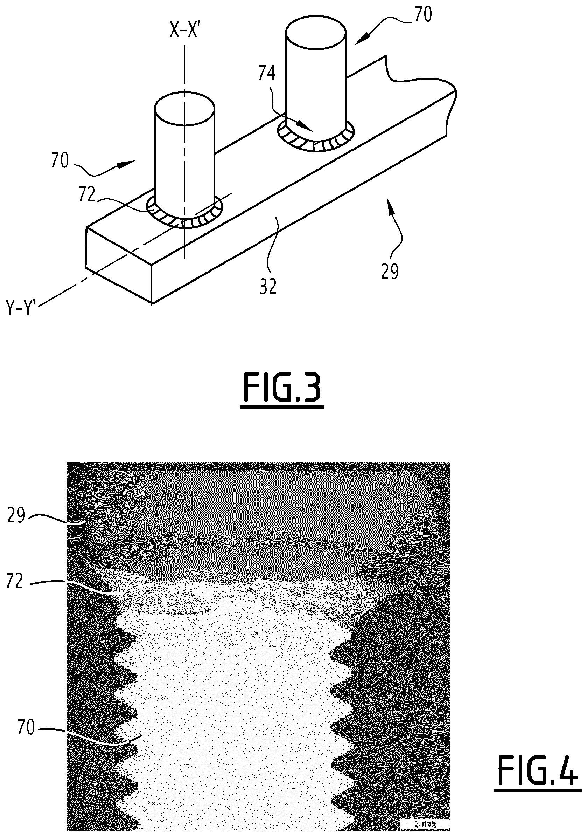

Comme représenté sur les figures 2 et 3, les tronçons d'extrémité 32 des éléments d'armure 29 sont munis chacun d'au moins un élément d'ancrage 70, par exemple deux éléments d'ancrage 70 dans le cas représenté. Chaque élément d'ancrage 70 fait saillie transversalement à partir du tronçon d'extrémité 32 de l'élément d'armure 29 vers l'extérieur de la conduite 10.

Dans le cas où le tronçon d'extrémité 32 est muni de plusieurs éléments d'ancrage 70, les éléments d'ancrage 70 sont sensiblement alignés le long de l'élément d'armure 29, et séparés les uns des autres d'une distance, mesurée par rapport au centre de chaque élément d'ancrage, comprise entre 2 cm et 20 cm, préférentiellement entre 2 cm et 10 cm et avantageusement entre 2 cm et 5 cm.

L'élément d'ancrage 70 est une pièce métallique, par exemple cylindrique, présentant un axe X-X'. En variante, l'élément d'ancrage 70 présente une forme de cylindre fileté d'axe X-X', ou encore de parallélépipède allongé selon une direction X-X' transverse à l'élément d'armure 29.

Avantageusement, l'axe X-X' de l'élément d'ancrage 70 est sensiblement orthogonal à un axe local Y-Y' de l'élément d'armure 29 au niveau de la fixation de l'élément d'ancrage 70 sur l'élément d'armure 29.

L'élément d'ancrage 70 présente une longueur, mesurée dans une direction transverse à l'axe Y-Y' de l'élément d'armure 29, et une largeur, mesurée dans une dimension parallèle à l'axe Y-Y' de l'élément d'armure 29.

Selon l'invention, un ratio entre la longueur et la largeur de l'élément d'ancrage 70 est supérieur à 2, avantageusement supérieur à 4.

L'élément d'ancrage 70 est par exemple en acier, et présente une limite de résistance en traction supérieure ou égale à 400 MPa, avantageusement supérieure à 600 MPa, telle que mesurée selon les normes NF EN ISO 6892-1 (Edition Novembre 2016), NF EN ISO 898-1 (Edition Mai 2013) et NF EN ISO 3506-1 (Edition Janvier 2010).

En référence à la figure 4, l'élément d'ancrage 70 est fixé à l'élément d'armure 29 par une soudure 72 liant une extrémité basse 74 de l'élément d'ancrage 70 à l'élément d'armure 29.

La longueur de l'élément d'ancrage 70 est supérieure à une épaisseur de l'élément d'armure 29, mesurée selon l'axe X-X' de l'élément d'ancrage 70, avantageusement deux fois supérieure.

Le ou les éléments d'ancrage 70 sont noyés dans le matériau de remplissage 64. Un ratio élevé assure un meilleur maintien du tronçon d'extrémité 32 de l'élément d'armure 29 dans l'espace 52 de réception, grâce à une meilleure interaction avec le matériau de remplissage 64.

Comme illustré sur la figure 4, la soudure 72 présente une étendue légèrement supérieure à la largeur de l'élément d'ancrage 70, mais inférieure à une largeur de l'élément d'armure 29, mesurée dans une direction orthogonale à l'axe X-X' de l'élément d'ancrage 70 et à l'axe Y-Y' de l'élément d'armure 29.

La soudure 72 présente une résistance mécanique élevée au cisaillement selon une direction parallèle à l'axe Y-Y' de l'élément d'armure 29. Ainsi, chaque élément d'ancrage 70 présente une tenue maximale en cisaillement selon l'axe Y-Y' de l'élément d'armure 29 supérieure ou égale à 15 kN, avantageusement supérieure à 30 kN, telle que mesurée par les normes NF EN ISO 6892-1 (Edition Novembre 2016), NF EN ISO 898-1 (Edition Mai 2013) et NF EN ISO 3506-1 (Edition Janvier 2010).

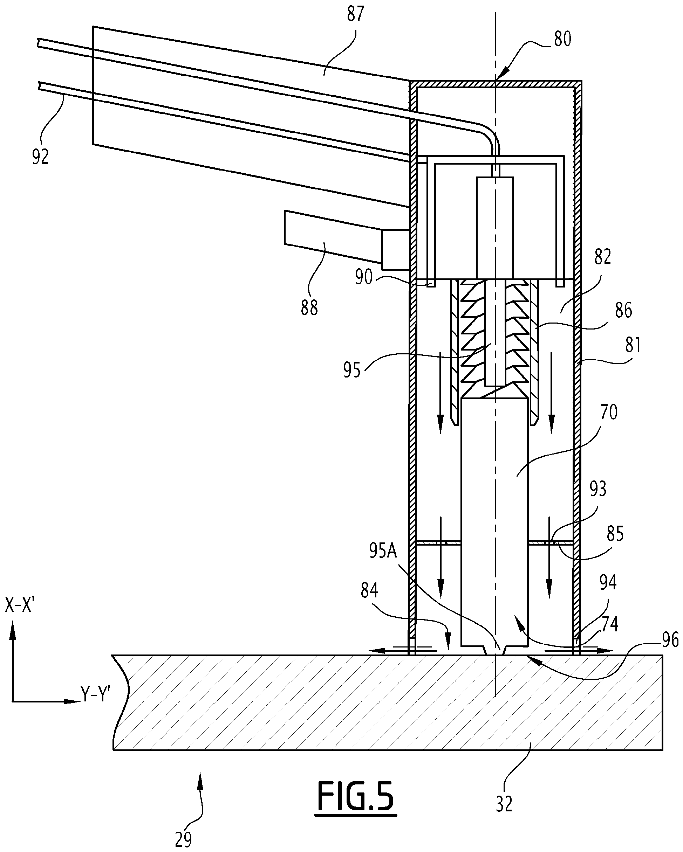

Le procédé de fixation de l'élément d'ancrage 70 sur l'élément d'armure 29 va maintenant être décrit, en référence aux figures 5 à 7.

Ce procédé est mis en œuvre à l'aide d'un dispositif 80 de fixation, représenté schématiquement sur les figures 5 à 7, adapté pour fixer l'élément d'ancrage 70.

Le dispositif 80 est par exemple un pistolet de soudage, comprenant une électronique de contrôle apte à mettre en œuvre le procédé de fixation de type « fusion-forgeage ».

Le dispositif 80 comprend un tube 81 définissant une cavité 82 dans laquelle est chargé l'élément d'ancrage 70. La cavité 82 présente la forme d'un cylindre allongé, débouchant à une extrémité du tube 81 par une ouverture 84.

Le dispositif 80 comprend, dans la cavité 82, un guide 85 adapté pour guider l'élément d'ancrage 70 dans la cavité 82, et une pince 86 maintenant l'élément d'ancrage 70 dans la cavité 82.

Le dispositif 80 comprend également une poignée 87, située du côté opposé du tube 81 par rapport à l'ouverture 84, adaptée pour la manutention du dispositif 80, ainsi qu'un déclencheur 88 situé proche de la poignée 87, apte à déclencher le procédé de fixation de l'élément d'ancrage 70.

Le dispositif 80 comprend au moins une buse 90 de diffusion de gaz neutre débouchant dans la cavité 82, reliée à un tuyau 92 d'approvisionnement en gaz neutre. Pour que le gaz puisse s'écouler dans la cavité 82, le guide 85 présente des perforations 93, et le tube 81 présente également des perforations radiales 94 au niveau de l'ouverture 84.

Le dispositif 80 comprend en outre un percuteur 95, apte à appliquer une force de forgeage sur l'élément d'ancrage 70, ainsi qu'un générateur de courant électrique (non représenté), apte à générer au moins un courant électrique à travers l'élément d'ancrage 70 et l'élément d'armure 29 quand ils sont au contact l'un de l'autre.

Lorsque l'élément d'ancrage 70 est à l'écart de l'élément d'armure 29, le générateur de courant électrique est apte à former un arc électrique de fusion entre l'élément d'ancrage 70 et l'élément d'armure 29.

Le dispositif 80 est manipulé par un opérateur qui le tient par la poignée 87.

Comme représenté sur la figure 5, un élément d'ancrage 70 est fourni, mis en place dans la cavité 82 du dispositif 80. L'élément d'ancrage 70 est disposé avec l'extrémité basse 74 orientée vers l'ouverture 84, et est maintenu dans la pince 86 par son extrémité libre.

L'élément d'ancrage 70 est par exemple mis en place manuellement dans la cavité 82 par l'opérateur.

En variante, le dispositif 80 comporte un système de chargement apte à mettre en place l'élément d'ancrage 70, et à le remplacer à la fin du procédé de fixation. Ceci permet de mettre en œuvre une succession de fixations d'éléments d'ancrage 70, avec une durée séparant chaque fixation inférieure ou égale à 5 secondes.

De préférence, l'extrémité basse 74 de l'élément d'ancrage 70 est plane. Mais avantageusement, l'extrémité basse 74 présente une protubérance 95A faisant saillie en direction de l'élément d'armure 29. Ceci facilite le soudage de l'élément d'ancrage 70 sur l'élément d'armure 29.

Au cours d'une première étape de mise en place du dispositif 80, le tube 81 est mis en contact avec un tronçon d'extrémité 32 d'un élément d'armure 29. L'ouverture 84 de la cavité 82 s'étend en regard de l'élément d'armure 29 et définit sur l'élément d'armure 29 une région de fixation 96 de l'élément d'ancrage 70.

L'élément d'ancrage 70 est initialement positionné au contact de l'élément d'armure 29.

Préférentiellement, le dispositif 80 est orienté de façon à ce que l'axe du tube 81 soit sensiblement orthogonal à l'axe local de l'élément d'armure 29.

Lors d'une étape de diffusion, l'opérateur active le déclencheur 88, et du gaz neutre est diffusé par les buses 90. Le gaz neutre s'écoule dans la cavité 82, à travers les perforations 93, jusqu'à l'ouverture 84. Le gaz neutre s'écoule notamment autour de l'élément d'ancrage 70 et de la région de 96 de fixation, puis le long des perforations radiales 94 jusqu'à l'extérieur.

Après une durée de diffusion de l'ordre de 0,5 seconde à 2 secondes, le gaz neutre a chassé au moins partiellement l'air autour de l'élément d'ancrage 70 et de la région 96 de fixation.

La diffusion de gaz neutre par les buses 90 est maintenue au cours des étapes suivantes, et réduit la porosité dans la soudure 72, ce qui améliore sa résistance mécanique.

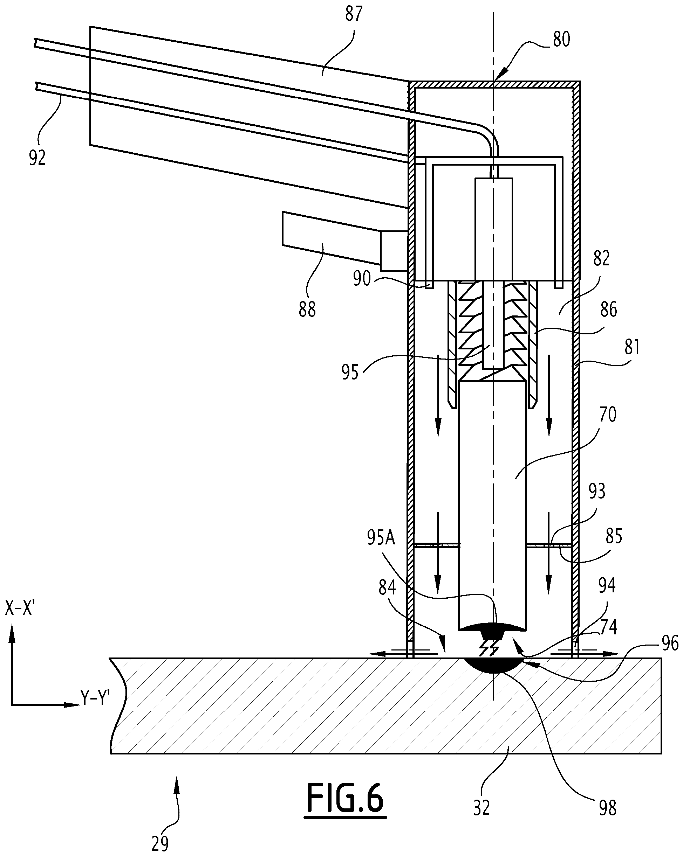

Une étape de fusion, représentée sur la figure 6, est déclenchée une fois la durée de diffusion écoulée. La durée de l'étape de diffusion est avantageusement programmée dans l'électronique de contrôle du dispositif 80, et celle-ci déclenche automatiquement l'étape suivante une fois la durée écoulée. Cette durée est par exemple inférieure à 1 seconde.

Au cours de l'étape de fusion, un courant électrique est généré par le générateur de courant électrique à travers l'élément d'ancrage 70 et l'élément d'armure 29.

L'élément d'ancrage 70 est ensuite progressivement écarté de l'élément d'armure 29, ce qui conduit à la génération d'un arc électrique de fusion dans le volume gazeux présent entre l'élément d'ancrage 70 et l'élément d'armure 29 par le générateur de courant électrique. L'arc électrique de fusion se forme dans la cavité 82, dans le flux de gaz neutre.

Avantageusement, l'arc électrique de fusion se forme initialement entre la face plane de l'extrémité basse 74 de l'élément d'ancrage 70 ou lorsqu'elle est présente, entre la protubérance 95A et l'élément d'armure 29, grâce à la distance réduite qui les sépare.

Sous l'effet de la chaleur dégagée par l'arc électrique de fusion, l'extrémité basse 74 de l'élément d'ancrage 70 et une partie de la région 96 de fixation fondent partiellement, formant un bain de fusion 98 sur l'élément d'armure 29. Le bain de fusion 98 contient du métal fondu et présente une largeur mesurée transversalement à l'axe X-X' supérieure à la largeur de l'élément d'ancrage 70 mesurée transversalement à l'axe X-X'.

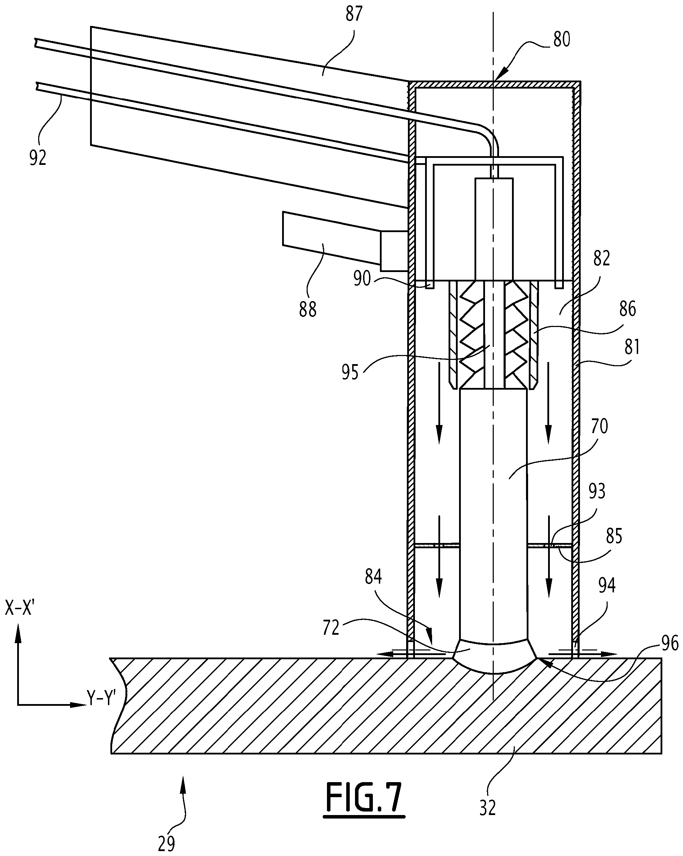

Une étape de forgeage, représentée sur la figure 7, est alors déclenchée par l'électronique de contrôle du dispositif 80, au cours de laquelle le percuteur 95 exerce une force sur l'élément d'ancrage 70 selon l'axe X-X' pour forger l'extrémité basse 74 contre l'élément d'armure 29. L'extrémité basse 74 est plongée dans le bain de fusion 98, fusionnant l'extrémité basse 74 de l'élément d'ancrage 70 et la région de fixation 96.

Le procédé comprend enfin une étape de traitement thermique au cours de laquelle la température dans la cavité 82 baisse, ce qui entraîne une solidification du métal fondu et la formation de la soudure 72.

Avantageusement, la baisse de la température dans la cavité 82 est contrôlée pour assurer une bonne résistance mécanique de la soudure 72.

De préférence, on réalise un traitement thermique de préchauffage de l'élément d'ancrage 70 avant l'étape de diffusion pour éviter des problèmes de fissuration à froid au niveau de la soudure. En outre, on réalise également un traitement thermique post-chauffage de l'élément d'ancrage 70 après l'avoir laissé refroidir aux fins de solidification de la soudure. Ce traitement thermique de post-chauffage consiste en une étape de recuit de l'élément d'ancrage 70. L'élément d'ancrage 70 est ainsi chauffé de manière à le remonter en température pour homogénéiser sa microstructure et éliminer les contraintes résiduelles pouvant subsister suite à la mise en œuvre du procédé de soudage.

Le procédé de fixation d'au moins un élément d'ancrage 70 décrit est particulièrement avantageux, puisqu'il nécessite une durée de mise en œuvre bien inférieure à celle des procédés existants. De plus, il est effectué avec un dispositif 80 plus simple et partiellement automatisé, nécessitant donc des compétences techniques moins importantes de la part de l'opérateur.

Selon une première variante non représentée, le procédé de fixation de l'élément d'ancrage 70 suit un procédé à temps court ne comprenant pas de diffusion de gaz neutre.

Dans ce cas, l'élément d'ancrage 70 présente une collerette s'étendant transversalement à l'axe X-X' autour de l'extrémité basse 74, afin d'augmenter l'étendue transversale de la soudure 72. Ceci compense en partie la plus faible résistance mécanique de la soudure 72 due à la formation d'une porosité due à l'absence de gaz neutre autour du bain de fusion 98 lors de l'étape de fusion.

L'étape de fusion comprend une étape préliminaire de formation d'un arc d'amorçage préalable à la formation de l'arc électrique de fusion.

L'arc d'amorçage présente une intensité inférieure à une intensité de l'arc électrique de fusion et amorce la fusion du matériau de l'extrémité basse 74 et de la région de fixation 96, ce qui permet d'accélérer le processus.

Selon une deuxième variante non représentée, la diffusion de gaz neutre est remplacée par la mise en place d'une bague en matériau réfractaire autour de l'élément d'ancrage 70. La bague s'élargit en dépassant autour de l'extrémité basse 74.

La bague vient en appui sur l'élément d'armure 29 lors de l'étape de mise en place du dispositif 80, définissant un espace fermé de protection du bain de fusion 98 lors de l'étape de fusion. La bague contient et isole le bain de fusion 98 de l'air environnant, réduisant la formation de porosité dans la soudure 72.

La bague est partiellement brûlée au cours de l'étape de fusion et se retire facilement de l'élément d'ancrage 70 une fois l'étape de traitement thermique terminée.

La méthode de montage de l'embout 14 selon l'invention est réalisée comme suit.

Initialement, les différentes couches de la conduite 10 sont coupées à la bonne longueur pour faire apparaître, sur la voûte de pression 28, un tronçon d'extrémité libre 32 de chaque élément d'armure 29 des couches d'armures 24, 25. Ceci étant fait, les tronçons d'extrémité 32 des éléments d'armure 29 des couches d'armures 24, 25 sont repliés vers l'arrière. La voûte d'extrémité 50 et l'ensemble avant d'étanchéité 54 sont ensuite mis en place. Puis, chaque tronçon d'extrémité 32 de la couche d'armures intérieure 24 est déplié vers l'avant.

Au moins un élément d'ancrage 70 est fixé sur chaque tronçon d'extrémité 32, selon le procédé de fixation décrit plus haut. Avantageusement, au moins deux éléments d'ancrage 70 sont fixés sur chaque tronçon d'extrémité 32.

Les tronçons d'extrémité 32 sont espacés les uns des autres d'une distance de l'ordre de quelques millimètres.

Ensuite, au moins un élément d'ancrage 70 est fixé sur chaque tronçon d'extrémité 32 des éléments 29 de la couche d'armures extérieure 25 selon le même procédé de fixation que celui utilisé pour la couche d'armures intérieure 24.

Puis, chaque tronçon d'extrémité 32 de la couche d'armures extérieure 25 est déplié vers l'avant.

Alternativement, la fixation du au moins un élément d'ancrage 70 sur les tronçons d'extrémité 32 des éléments d'armure 29 des couches d'armures 24, 25 peut être réalisée avant leur dépliage vers l'avant.

Le capot 51 est ensuite mis en place et fixé à la voûte 50, formant ainsi l'espace 52 de réception autour des tronçons d'extrémité 32.

L'ensemble arrière 55 d'étanchéité est ensuite mis en place et est fixé au capot 51.

Selon une première variante, les tronçons d'extrémité 32 des éléments d'armure 29 de la couche d'armures extérieure 25 sont repliés vers l'arrière pour permettre un accès aux éléments 29 de la couche d'armures intérieure 24. Au moins un élément d'ancrage 70 est fixé sur chaque tronçon d'extrémité 32 de la couche d'armures intérieure 24, selon le procédé de fixation décrit plus haut. Avantageusement, au moins deux éléments d'ancrage 70 sont fixés sur chaque tronçon d'extrémité 32.

Ensuite, au moins un élément d'ancrage 70 est fixé sur chaque tronçon d'extrémité 32 des éléments 29 de la couche d'armures extérieure 25 selon le même procédé de fixation que celui utilisé pour la couche d'armures intérieure 24. Puis, chaque tronçon d'extrémité 32 de la couche d'armures extérieure 25 est déplié vers l'avant.

Alternativement, la fixation du au moins un élément d'ancrage 70 sur les tronçons d'extrémité 32 des éléments d'armure 29 de la couche d'armures extérieure 25 est réalisée après leur dépliage vers l'avant.

De préférence, selon une deuxième variante de réalisation de la méthode de montage de l'embout 14 selon l'invention, les tronçons d'extrémité 32 des couches d'armures 24, 25 sont disposés lors de la fabrication de l'embout 10 pour présenter leur conformation la plus proche possible de leur conformation naturelle, dans laquelle ils sont le moins contraints.

Cette conformation est obtenue en laissant les tronçons d'extrémité 32 de chaque couche 24, 25 se relâcher librement, ce qui leur permet d'adopter une configuration divergente, en forme de tulipe. Les tronçons d'extrémité 32 ainsi configurés n'ont pas besoin d'être repliés vers l'arrière puis dépliés vers l'avant pour permettre la mise en place de la voûte d'extrémité 50 et de l'ensemble avant d'étanchéité 54.

Ainsi, une fois l'accès aux tronçons d'extrémité libre 32 de chaque élément d'armure 29 des couches d'armures 24, 25 autorisé suite au découpage des couches extérieures, au moins un élément d'ancrage 70 est fixé sur chaque tronçon d'extrémité 32 des couches d'armures 24, 25 selon le même procédé de fixation que celui décrit ci-avant. Avantageusement, au moins deux éléments d'ancrage 70 sont fixés sur chaque tronçon d'extrémité 32.

Le capot 51 est ensuite mis en place et fixé à la voûte 50, formant ainsi l'espace 52 de réception autour des tronçons d'extrémité 32.

L'ensemble arrière 55 d'étanchéité est ensuite mis en place et est fixé au capot 51.

Avantageusement, selon une troisième variante (non représentée), on usine la gaine externe 30 pour faire apparaître la couche d'armures extérieure 25. Une canule arrière, élément faisant partie de l'ensemble arrière 55 d'étanchéité est alors insérée entre la couche d'armures 25 et la gaine externe 30. On dispose ensuite un premier collier de fixation du type « band-it » autour de la couche d'armures extérieure 25, à proximité de la canule arrière, en laissant une longueur suffisante entre le premier collier de fixation et la canule arrière pour permettre la fixation d'au moins un élément d'ancrage 70.

Au moins un élément d'ancrage 70 est alors fixé sur chaque tronçon d'extrémité 32 des éléments 29 de la couche d'armures extérieure 25, entre le premier collier de fixation et la canule arrière, selon le même procédé de fixation que celui décrit ci-avant. Avantageusement, au moins deux éléments d'ancrage 70 sont fixés sur chaque tronçon d'extrémité 32 de des éléments d'armures 29. Enfin, on découpe l'ensemble des sur-longueurs des tronçons d'extrémité 32 de chaque élément d'armures 29 formant la couche d'armures extérieure 25, situées en avant du collier de fixation.

Le fait de supprimer les sur-longueurs des éléments d'armures 29 de la couche 25 permet d'accéder à la couche d'armures intérieure 24. En procédant de la même manière que précédemment, on dispose un deuxième collier de fixation autour de la couche d'armures intérieure 24 en laissant une longueur suffisante entre le deuxième collier de fixation et la couche d'armures extérieure 25, pour permettre la fixation d'au moins un élément d'ancrage 70.

Au moins un élément d'ancrage est alors fixé sur chaque tronçon d'extrémité 32 des éléments 29 de la couche d'armures intérieure 24, entre le deuxième collier de fixation et la couche d'armures 25, selon le même procédé de fixation que précédemment. Avantageusement, au moins deux éléments d'ancrage 70 sont fixés sur chaque tronçon d'extrémité 32 de la couche d'armures 24.

Le capot 51 est ensuite mis en place et fixé à la voûte 50, formant ainsi l'espace 52 de réception autour des tronçons d'extrémité 32.

Le reste des éléments formant l'ensemble arrière 55 d'étanchéité est ensuite mis en place et est fixé au capot 51.

Cette dernière méthode de montage d'embout d'extrémité a pour avantage de raccourcir la longueur totale nécessaire de l'embout ainsi que de réduire le coût total d'une conduite flexible comportant un tel embout. En effet, la longueur des tronçons d'extrémité 32 étant réduite, il n'est plus nécessaire de prévoir la fourniture d'une voûte d'embout 50 ayant une zone présentant une section tronconique.

Le matériau de remplissage 64 est alors introduit dans l'espace 52, avantageusement sous forme fluide.

Le matériau 64 remplit l'espace 52 et se solidifie entre la voûte 50 et le capot 51 autour des tronçons d'extrémité 32 des éléments d'armures 29 et autour des éléments d'ancrage 70. Le matériau 64 se solidifie à température ambiante, correspondant à la température à l'intérieur de l'embout, et sous pression atmosphérique. Dans les cas où la température extérieure est inférieure à 15°C, on utilise des moyens de chauffe pour contrôler la solidification du matériau 64, par exemple une couverture chauffante.

Le temps de solidification est de l'ordre de quelques heures, plus particulièrement de 3 heures à 6 heures.

Les tronçons d'extrémité 32 sont alors noyés dans le matériau de remplissage 64.

En fonctionnement, lorsque l'embout 14 est raccordé à un autre embout ou à un ensemble de surface, la tension axiale transmise par les couches d'armures 24, 25 résultant du poids de la conduite 10 est reprise par les tronçons 32 noyés dans le matériau de remplissage 82, et plus particulièrement par les éléments d'ancrage 70.

## Revendications

1. Procédé de fixation d'au moins un élément d'ancrage (70) transverse sur un élément d'armure (29) destiné à être reçu dans un embout (14) d'extrémité d'une conduite flexible (10), **caractérisé en ce que** le procédé comprend les étapes suivantes :
- fourniture d'un dispositif de fixation (80) présentant une cavité (82) recevant un élément d'ancrage (70) ;
- mise en place d'une ouverture (84) de la cavité (82) en regard de l'élément d'armure (29) ;
- fusion d'une extrémité (74) de l'élément d'ancrage (70) en regard de l'élément d'armure (29) et d'une région de l'élément d'armure (29) en regard de l'élément d'ancrage (70), dans la cavité (82) du dispositif de fixation (80) ;
- forgeage de l'élément d'ancrage (70) transversalement sur l'élément d'armure (29), par le dispositif de fixation (80) ; et
- formation d'une soudure (72) liant l'élément d'ancrage (70) et l'élément d'armure (29).

2. Procédé selon la revendication 1, comprenant une étape de traitement thermique de l'élément d'ancrage (70) et de l'élément d'armure (29) postérieure à l'étape de forgeage, la soudure (72) liant l'élément d'ancrage (70) et l'élément d'armure (29) se formant lors de l'étape de traitement thermique.

3. Procédé selon l'une quelconque des revendications 1 et 2, dans lequel la soudure (72) présente une étendue transversale inférieure à une largeur de l'élément d'armure (29).

4. Procédé selon l'une quelconque des revendications précédentes, dans lequel l'étape de fusion comprend la formation d'un arc électrique de fusion entre l'élément d'ancrage (70) et l'élément d'armure (29).

5. Procédé selon l'une quelconque des revendications précédentes, comprenant une étape de diffusion d'un gaz neutre autour d'au moins l'un de l'extrémité (74) de l'élément d'ancrage (70) ou de la région de l'élément d'armure (29), l'étape de diffusion ayant lieu pendant les étapes de fusion et de forgeage.

6. Procédé selon l'une quelconque des revendications 4 et 5, dans lequel l'étape de fusion comprend la formation d'un arc d'amorçage préalable à la formation de l'arc électrique de fusion, l'arc d'amorçage présentant une intensité inférieure à une intensité de l'arc électrique de fusion.

7. Procédé selon l'une quelconque des revendications précédentes, dans lequel une bague réfractaire est positionnée autour de l'extrémité (74) de l'élément d'ancrage (70) en regard de l'élément d'armure (29) au cours de l'étape de mise en place.

8. Procédé selon l'une quelconque des revendications précédentes, dans lequel un ratio entre une longueur de l'élément d'ancrage (70), mesurée selon une direction transverse à l'élément d'armure (29), et une largeur de l'élément d'ancrage (70), mesurée selon une direction parallèle à l'élément d'armure (29), est supérieur à 2, avantageusement supérieur à 4.

9. Procédé selon la revendication 8, dans lequel la longueur de l'élément d'ancrage (70) est supérieure à une épaisseur de l'élément d'armure (29), mesurée selon la même direction que la longueur de l'élément d'ancrage (70), avantageusement deux fois supérieure à l'épaisseur de l'élément d'armure (29).

10. Procédé selon l'une quelconque des revendications précédentes, dans lequel l'élément d'ancrage (70) est sensiblement cylindrique et présente un axe (X-X') sensiblement perpendiculaire à un axe local (Y-Y') de l'élément d'armure (29).

11. Procédé selon l'une quelconque des revendications précédentes, comprenant une succession de fixations d'éléments d'ancrage (70) transverses, chaque fixation comprenant les étapes de fourniture, de mise en place, de fusion et de forgeage, une durée séparant chaque fixation étant inférieure ou égale à 1 minute, avantageusement inférieure à 30 secondes.

12. Procédé selon la revendication 11, dans lequel les éléments d'ancrage (70) sont fixés séparés les uns des autres d'une distance le long de l'élément d'armure (29) comprise entre 2 cm et 20 cm, préférentiellement entre 2 cm et 10 cm et avantageusement entre 2 cm et 5 cm.

13. Procédé selon l'une quelconque des revendications précédentes, dans lequel l'élément d'ancrage (70) est fait à base d'un acier présentant une résistance mécanique en traction supérieure ou égale à 400 MPa.

14. Méthode de montage d'un embout (14) d'extrémité de conduite flexible comprenant les étapes suivantes :
- fourniture d'une conduite flexible (10) comprenant :
- au moins une gaine tubulaire (20) délimitant un passage de circulation (16) ; et
- au moins une couche d'armures (24, 25) de traction disposée extérieurement par rapport à la gaine tubulaire (20), la couche d'armures (24, 25) comprenant une pluralité d'éléments d'armure (29) filiformes ;
- dégagement d'un tronçon d'extrémité (32) de chaque élément d'armure (29) ;
- mise en place d'une voûte d'extrémité (50) à une extrémité de la conduite (10) ;
- fixation d'au moins un élément d'ancrage (70) sur chaque élément d'armure (29) par un procédé selon l'une quelconque des revendications 1 à 13 ;
- mise en place et fixation d'un capot (51) sur la voûte d'extrémité (50), formant un espace (52) de réception des tronçons d'extrémité (32) des éléments d'amure (29) ;
- introduction d'un matériau de remplissage (64) dans l'espace (52), noyant les éléments d'ancrage (70) ; et
- solidification du matériau de remplissage (64) autour des tronçons d'extrémité (32) et des éléments d'ancrage (70).

15. Conduite flexible (10) comprenant :
- au moins une gaine tubulaire (20) délimitant un passage de circulation (16) ;
- au moins une couche d'armures (24, 25) de traction disposée extérieurement par rapport à la gaine tubulaire (20), la couche d'armures (24, 25) comprenant une pluralité d'éléments d'armure (29) filiformes ; et
- au moins un embout (14) d'extrémité situé à une extrémité de la conduite (10),
l'embout (14) comportant une voûte d'extrémité (50) et un capot (51), définissant entre eux un espace (52) de réception des tronçons d'extrémité (32) des éléments d'armure (29), l'espace (52) étant rempli d'un matériau de remplissage (64), chaque tronçon d'extrémité (32) présentant au moins un élément d'ancrage (70) faisant saillie de façon transverse, l'élément d'ancrage (70) étant noyé dans le matériau de remplissage (64), **caractérisé en ce que** l'élément d'ancrage (70) ; a été fixé au tronçon d'extrémité (32) par un procédé selon l'une quelconque des revendications 1 à 13.

## Patentansprüche

1. Verfahren zum Befestigen von zumindest einem querverlaufenden Ankerelement (70) an einem Armierungselement (29), welches dazu bestimmt ist, in einem Endanschlussstück (14) einer flexiblen Leitung (10) aufgenommen zu sein, **dadurch gekennzeichnet, dass** das Verfahren die folgenden Schritte aufweist:
- Bereitstellen einer Befestigungsvorrichtung (80), welche eine Kavität (82) hat, welche ein Ankerelement (70) aufnimmt,
- Anordnen einer Öffnung (84) der Kavität (82) gegenüber dem Armierungselement (29),
- Verschmelzen eines dem Armierungselement (29) gegenüberliegenden Endes (74) des Ankerelements (70) und eines dem Ankerelement (70) gegenüberliegenden Bereichs des Armierungselements (29) in der Kavität (82) der Befestigungsvorrichtung (80),
- Schmieden des Ankerelements (70) quer an das Armierungselement (29) mittels der Befestigungsvorrichtung (80) und
- Bilden einer Schweißung (72), welche das Ankerelement (70) und das Armierungselement (29) verbindet.

2. Verfahren gemäß Anspruch 1, welches einen Schritt des thermischen Behandelns des Ankerelements (70) und des Armierungselements (29) nach dem Schritt des Schmiedens aufweist, wobei sich die Schweißung (72), welche das Ankerelement (70) und das Armierungselement (29) verbindet, während des Schritts des thermischen Behandelns bildet.

3. Verfahren gemäß irgendeinem der Ansprüche 1 und 2, wobei die Schweißung (72) eine Quererstreckung hat, welche kleiner als eine Breite des Armierungselements (29) ist.

4. Verfahren gemäß irgendeinem der vorherigen Ansprüche, wobei der Schritt des Verschmelzens aufweist das Bilden eines elektrischen Schmelz-Lichtbogens zwischen dem Ankerelement (70) und dem Armierungselement (29).

5. Verfahren gemäß irgendeinem der vorherigen Ansprüche, welcher aufweist einen Schritt des Verteilens eines neutralen Gases um zumindest eines des Endes (72) des Ankerelements (70) oder des Bereichs des Armierungselements (29) herum, wobei der Schritt des Verteilens während der Schritte des Verschmelzens und des Schmiedens stattfindet.

6. Verfahren gemäß irgendeinem der Ansprüche 4 und 5, wobei der Schritt des Verschmelzens aufweist das Bilden eines Zündbogens vor dem Bilden des elektrischen Schmelz-Lichtbogens, wobei der Zündbogen eine Intensität hat, welche kleiner als eine Intensität des elektrischen Schmelz-Lichtbogens ist.

7. Verfahren gemäß irgendeinem der vorherigen Ansprüche, wobei ein wärmefester Ring um das Ende (74) des Ankerelements (70) herum gegenüber dem Armierungselement (29) im Lauf des Schritts des Anordnens angeordnet wird.

8. Verfahren gemäß irgendeinem der vorherigen Ansprüche, wobei ein Verhältnis zwischen einer Länge des Ankerelements (70), gemessen entlang einer Richtung, welche quer zum Armierungselement (29) ist, und einer Länge des Ankerelements (70), gemessen entlang einer Richtung, welche parallel zum Armierungselement (29) ist, größer als 2, vorteilhafterweise größer als 4, ist.

9. Verfahren gemäß Anspruch 8, wobei die Länge des Ankerelements (70) größer ist als eine Dicke des Armierungselements (29), gemessen entlang derselben Richtung wie die Länge des Ankerelements (70), vorteilhafterweise zweimal größer als die Dicke des Armierungselements (29).

10. Verfahren gemäß irgendeinem der vorherigen Ansprüche, wobei das Ankerelement (70) im Wesentlichen zylindrisch ist und eine Achse (X-X') hat, welche im Wesentlichen senkrecht zu einer lokalen Achse (Y-Y') des Armierungselements (29) ist.

11. Verfahren gemäß irgendeinem der vorherigen Ansprüche, welches eine Abfolge von Befestigen-Schritten von querverlaufenden Ankerelementen (70) hat, wobei jeder Befestigen-Schritt aufweist die Schritte des Bereitstellens, des Anordnens, des Verschmelzens und des Schmiedens, wobei eine Dauer, welche einen jeweiligen Befestigen-Schritt trennt, kleiner oder gleich 1 Minute, vorteilhafterweise kleiner als 30 Sekunden, ist.

12. Verfahren gemäß Anspruch 11, wobei die Ankerelemente (70) getrennt voneinander in einem Abstand entlang des Armierungselements (29), welcher zwischen 2 cm und 20 cm, vorzugsweise zwischen 2 cm und 10 cm und vorteilhafterweise zwischen 2 cm und 5 cm liegt, angeordnet werden.

13. Verfahren gemäß irgendeinem der vorherigen Ansprüche, wobei das Ankerelement (70) auf Basis eines Stahls herstellt ist, welcher eine mechanische Zugfestigkeit hat, welche größer oder gleich 400 MPa ist.

14. Verfahren zum Montieren eines Endanschlussstücks (14) einer flexiblen Leitung, welches die folgenden Schritte aufweist:
- Bereitstellen einer flexiblen Leitung (10), welche aufweist:
- zumindest eine rohrförmige Ummantelung (20), welche einen Zirkulationsdurchlass (16) begrenzt, und
- zumindest eine Zugarmierungsschicht (24, 25), welche außen bezüglich der rohrförmigen Ummantelung (20) angeordnet ist, wobei die Armierungsschichten (24, 25) eine Mehrzahl von filiformen Armierungselementen (29) aufweisen,
- Freilegen eines Endabschnitts (32) jedes Armierungselements (29),
- Anordnen einer Endvoute (50) an einem Ende der Leitung (10),
- Befestigen von zumindest einem Ankerelement (70) an jedem Armierungselement (29) mittels eines Verfahrens gemäß irgendeinem der Ansprüche 1 bis 13,
- Anordnen und Befestigen einer Kappe (51) an der Endvoute (50), welche einen Raum (52) zum Aufnehmen der Endabschnitte (32) der Armierungselemente (29) bildet,
- Einbringen eines Füllmaterials (64) in den Raum (52), welches die Ankerelemente (70) einbettet, und
- Verfestigen des Füllmaterials (64) um die Endabschnitte (32) und die Ankerelemente (70) herum.

15. Flexible Leitung (10), welche aufweist:
- zumindest eine rohrförmige Ummantelung (20), welche einen Zirkulationsdurchlass (16) begrenzt,
- zumindest eine Zugarmierungsschicht (24, 25), welche außen bezüglich der rohrförmigen Ummantelung (20) angeordnet ist, wobei die Armierungsschichten (24, 25) eine Mehrzahl von filiformen Armierungselementen (29) aufweisen, und
- zumindest ein Endanschlussstück (14), welches an einem Ende der Leitung (10) angeordnet ist,
wobei das Anschlussstück (14) eine Endvoute (50) und eine Kappe (51) aufweist, welche zwischen einander einen Raum (52) zum Aufnehmen von Endabschnitten (32) der Armierungselemente (29) definieren, wobei der Raum (52) mit einem Füllmaterial (64) gefüllt ist,
wobei jeder Endabschnitt (32) zumindest ein Ankerelement (70) hat, welches auf querverlaufende Weise vorsteht, wobei das Ankerelement (70) in das Füllmaterial (64) eingebettet ist, **dadurch gekennzeichnet, dass** das Ankerelement (70) am Endabschnitt (32) mittels eines Verfahrens gemäß irgendeinem der Ansprüche 1 bis 13 befestigt wurde.

## Claims

1. A method for attaching at least one transverse anchorage element (70) on an armor element (29) intended to be received in an end-fitting (14) of a flexible pipe (10), **characterized in that** it comprises the following steps:
- supply of an attachment device (80) having a cavity (82) accepting an anchorage element (70);
- bringing of an opening (84) of the cavity (82) to face the armor element (29);
- melting of one end (74) of the anchorage element (70) facing the armor element (29) and of a region of the armor element (29) facing the anchorage element (70), inside the cavity (82) of the attachment device (80);
- forging of the anchorage element (70) transversely on the armor element (29), using the attachment device (80); and
- formation of a weld (72) connecting the anchorage element (70) and the armor element (29).

2. The method according to claim 1, comprising a step for heat treatment of the anchorage element (70) and the armor element (29) after the forging step, the weld (72) connecting the anchorage element (70) and the armor element (29) forming during the heat treatment step.

3. The method according to any one of claims 1 and 2, wherein the weld (72) has a transverse expanse smaller than a width of the armor element (29).

4. The method according to any one of the preceding claims, wherein the melting step comprises forming a melting electric arc between the anchorage element (70) and the armor element (29).

5. The method according to any one of the preceding claims, comprising a step of diffusing a neutral gas around at least one of the end (74) of the anchorage element (70) or the region of the armor element (29), the diffusing step taking place during the melting and forging steps.

6. The method according to any one of claims 4 and 5, **characterized in that** the melting step comprises forming a priming arc before the formation of the melting electric arc, the priming arc having a lower intensity than an intensity of the melting electric arc.

7. The method according to any one of the preceding claims, wherein a refractory ring is positioned around the end (74) of the anchorage element (70) facing the armor element (29) during the bringing step.

8. The method according to any one of the preceding claims, wherein a ratio between a length of the anchorage element (70), measured along a direction transverse to the armor element (29), and a width of the anchorage element (70), measured along a direction parallel to the armor element (29), is greater than 2, advantageously greater than 4.

9. The method according to claim 8, wherein the length of the anchorage element (70) is greater than a thickness of the armor element (29), measured along the same direction as the length of the anchorage element (70), advantageously two times greater than the thickness of the armor element (29).

10. The method according to any one of the preceding claims, wherein the anchorage element (70) is substantially cylindrical and has an axis (X-X') substantially perpendicular to a local axis (Y-Y') of the armor element (29).

11. The method according to any one of the preceding claims, comprising a series of attachments of transverse anchorage elements (70), each attachment comprising the supply, bringing, melting and forging steps, a duration separating each attachment being less than or equal to 1 minute, advantageously less than 30 seconds.

12. The method according to claim 11, wherein the anchorage elements (70) are attached separated from one another by a distance along the armor element (29) comprised between 2 cm and 20 cm, preferably between 2 cm and 10 cm, and advantageously between 2 cm and 5 cm.

13. The method according to any one of the preceding claims, wherein the anchorage element (70) is made of a steel having a mechanical tensile strength greater than or equal to 400 MPa.

14. A method for mounting an end-fitting (14) for a flexible pipe comprising the following steps:
- supplying a flexible pipe (10) comprising:
- at least one tubular sheath (20) delimiting a circulation passage (16); and
- at least one tensile armor element (24, 25) positioned outwardly relative to the tubular sheath (20), the armor layer (24, 25) comprising a plurality of filiform armor elements (29);
- clearing an end segment (32) of each armor element (29);
- placing an end arch (50) at one end of the pipe (10);
- attaching at least one anchorage element (70) on each armor element (29) using a method according to any one of claims 1 to 13;
- placing and attaching a cover (51) on the end arch (50), forming a space (52) for receiving end segments (32) of the armor elements (29);
- inserting a filler material (64) into the space (52), embedding the anchorage elements (70); and
- solidifying the filler material (64) around the end segments (32) and anchorage elements (70).

15. A flexible pipe (10) comprising:
- at least one tubular sheath (20) delimiting a circulation passage (16);
- at least one tensile armor element (24, 25) positioned outwardly relative to the tubular sheath (20), the armor layer (24, 25) comprising a plurality of filiform armor elements (29); and
- at least one end-fitting (14) located at one end of the pipe (10),
the end-fitting (14) including an end arch (50) and a cover (51), defining a space (52) between them for receiving end segments (32) of the armor elements (29), the space (52) being filled with a filler material (64),
each end segment (32) having at least one anchorage element (70) protruding transversely, the anchorage element (70) being embedded in the filler material (64), **characterized in that** the anchorage element (70) has been attached to the end segment (32) by a method according to any one of claims 1 to 13.
